# FASCICULE DE BREVET EUROPEEN

(11) **EP 3 479 087 B1**
(45) Date de publication et mention de la délivrance du brevet: **31.03.2021**
(21) Numéro de dépôt: 17740458.9
(22) Date de dépôt: 29.06.2017
(51) Int. Cl.: G01K 1/10, G01K 7/02, G01K 7/12, G01K 13/02

(54) **BOITIER DE PROTECTION POUR CAPTEUR DE TEMPERATURE DE VEHICULE**
SCHUTZGEHÄUSE FÜR EINEN TEMPERATURSENSOR IN EINEM FAHRZEUG
PROTECTIVE CASING FOR A TEMPERATURE SENSOR IN A VEHICLE

(30) Priorité: 30.06.2016 FR 1656275
(43) Date de publication de la demande: 08.05.2019
(73) Titulaire: SC2N, 94046 Creteil Cedex (FR)
(72) Inventeur: KOPP, Gabriel, 14125 Mondeville (FR); SFAXI, Mahmoud, 14125 Mondeville (FR); GUIBET, Vincent, 14125 Mondeville (FR)
(74) Mandataire: Garcia, Christine
(86) Numéro de dépôt international: PCT/FR2017/051759
(87) Numéro de publication internationale: WO 2018/002547

(56) Documents cités:
- EP-A2- 2 485 023
- FR-A1- 2 723 202
- US-A1- 2015 023 391

## Description

La présente invention concerne un capteur de température pour moteur de véhicule et son procédé de fabrication.

Les capteurs de température comprenant un thermocouple pour mesurer les hautes températures sont largement utilisés dans le domaine des systèmes d'échappement de moteur à combustions interne.

Les thermocouples fournissent une précision de mesure relativement élevée. C'est pourquoi ils sont utilisés dans ce domaine ayant des exigences élevées en termes de contrôle d'émissions de polluants.

Le principe de mesure des thermocouples est basé sur l'effet Seebeck qui se traduit par une différence de potentiel entre deux fils métalliques différents lorsqu'ils sont soumis à une différence de température.

Les deux fils métalliques sont soudés entre eux à une première extrémité formant une jonction chaude (ou point chaud) destinée à mesurer la température T1 du milieu à mesurer, comme par exemple la température des gaz d'échappement d'un système d'échappement.

Les deux fils métalliques du thermocouple comportent également chacun une deuxième extrémité reliée chacune à un voltmètre par une jonction froide (ou point froid) qui est à une température de référence T0.

Ce type de capteur de température est connu pour comprendre un circuit imprimé (PCB) comportant un circuit intégré intégrant le voltmètre. Le circuit intégré est un circuit intégré à application spécifique ASIC (Application Specific for Integrated Circuit) capable de traiter des signaux de tension pour les convertir en température. Il est capable de fournir un signal de sortie analogique ou numérique et d'utiliser un protocole numérique de type SENT (Single Edge Nibble Transmission) ou PWM (Pulsed Width Modulation) ou encore PSI (Peripheral Sensor Interface).

Le signal de tension mesuré par le voltmètre aux deuxièmes extrémités des fils métalliques est transmis au circuit imprimé via des conducteurs électriques puis au circuit intégré.

La variation de tension entre ces deux deuxièmes extrémités des fils métalliques du thermocouple est proportionnelle à la variation de température entre la jonction chaude qui est à la température T1 et les deuxièmes extrémités des fils métalliques qui sont à une température de référence T0.

En connaissant la température de référence T0 du point froid et la tension entre les deuxièmes extrémités des fils métalliques, il est possible de déduire la température T1 du point chaud.

Dans ce type de capteur de température, le circuit intégré intègre une sonde de température pour la calibration du voltmètre dont la mesure dépend de la température. Cette sonde étant déjà présente, elle est habituellement utilisée pour mesurer la température de référence T0 dans le circuit intégré pour des raisons de simplification du capteur de température et pour réduire les coûts.

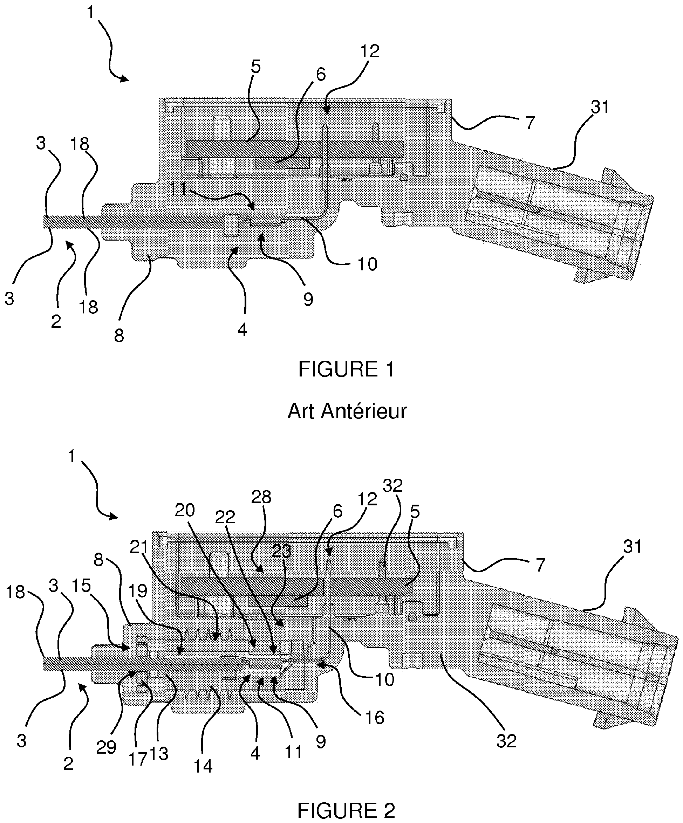

Les capteurs de température 1 de l'art antérieur, tels que représentés sur la figure 1, comprennent classiquement un boitier de protection 7 intégrant le circuit imprimé 5. Le boitier de protection 7 comprend un connecteur 8 dans lequel les deuxièmes extrémités 4 des deux fils métalliques 3 du thermocouple 2 sont connectées à deux premières extrémités 9 de deux pattes métalliques 10 par l'intermédiaire d'une zone de connexion 11.

Les deux pattes métalliques 10 comprennent une deuxième extrémité 12 reliées électriquement au circuit intégré 6 du circuit imprimé 5.

Chacun des fils métalliques 3 du thermocouple 2 est entouré d'une gaine de protection 18 en polymère.

La gaine de protection devant résister à des températures de l'ordre de 300°C, elle est en générale constituée de résines fluorocarbonées tels que le PFA (erfluoroalkoxy),le PTFE (Polytétrafluoroéthylène) ou encore l'ETFE (Tétrafluoroethylene).

Le boitier de protection et son connecteur sont obtenus par surmoulage d'une portion des fils métalliques entourés de leur gaine de protection, de la zone de connexion et d'une portion des pattes métalliques.

Cependant, l'utilisation d'une gaine de protection en résine fluorocarbonée ne permet pas d'obtenir une bonne étanchéité entre cette gaine de protection et le boitier de protection surmoulé autour de celle-ci en raison des propriétés d'anti-adhérence de ces polymères.

En effet, le boitier de protection est habituellement constitué de PBT (poly téréphtalate de butylène) ou de PA (polyamide) qui ne présente pas une bonne adhérence avec le PTFE ou le PFA.

Un défaut d'étanchéité peut entrainer une pénétration d'humidité ou de fluides présents sous capot moteur à l'intérieur du boitier de protection et endommager les composants électroniques du capteur ou fausser la mesure de température. Le document US 2015/023391 A1 montre un thermocouple logé dans un fourreau.

L'invention a donc pour objectif de pallier à cet inconvénient de l'art antérieur en proposant un capteur de température fournissant une meilleure étanchéité entre les fils du thermocouple et le boitier de protection, ainsi que le procédé de fabrication de ce capteur de température.

L'invention concerne un capteur de température pour moteur de véhicule, comprenant :
- au moins un thermocouple comportant deux fils métalliques différents soudés entre eux à une première extrémité formant une jonction chaude pour mesurer une température T1 dans le moteur, les deux fils métalliques comportant chacun une deuxième extrémité formant une jonction froide,
- un boitier de protection comprenant un connecteur dans lequel les deuxièmes extrémités des deux fils métalliques du thermocouple sont connectées à deux premières extrémités de deux pattes métalliques par l'intermédiaire de deux zones de connexion. Les deux pattes métalliques comprennent une deuxième extrémité reliées électriquement à un circuit imprimé comprenant un circuit intégré. Le circuit imprimé est logé dans le boitier de protection.

Selon l'invention, chaque zone de connexion est entourée par un élément d'étanchéité. Le connecteur comprend un support dans lequel sont logées les zones de connexion entourées des éléments d'étanchéité. Le support comprend une première extrémité traversée par les fils métalliques du thermocouple et une deuxième extrémité opposée traversée par les pattes métalliques. Le boitier de protection est surmoulé autour du support.

Selon un mode de réalisation possible, la première extrémité du support est une extrémité ouverte obturée par un moyen de fermeture comprenant deux orifices traversés par les fils métalliques du thermocouple.

Selon un mode de réalisation possible, chacun des fils métalliques étant entouré par une gaine de protection, l'élément d'étanchéité s'étend de la zone de connexion jusqu'à une portion de fil métallique entourée par la gaine de protection.

Selon un autre mode de réalisation possible, le support du connecteur comprend un évidemment au voisinage de sa deuxième extrémité. L'évidemment est formé dans la partie supérieure du support de façon à faire communiquer une portion des pattes métalliques ressortant de l'élément d'étanchéité avec l'extérieur du support.

Selon un autre mode de réalisation possible, le circuit intégré est positionné sur le circuit imprimé face à l'évidemment et une cavité est prévue à l'intérieur du boitier de protection entre l'évidemment du support et le circuit intégré.

Selon un autre mode de réalisation possible, la cavité du boitier de protection et l'évidemment du support sont remplis par un matériau conducteur thermique reliant le circuit intégré à la portion des pattes métalliques ressortant de l'élément d'étanchéité.

Selon un autre mode de réalisation possible, le capteur de température comprend plusieurs thermocouples comportant chacun deux fils métalliques connectés à deux pattes métalliques respectives par l'intermédiaire de deux zones de connexion.

Selon un autre mode de réalisation possible, le connecteur comprend plusieurs supports. Chacun des supports reçoit deux zones de connexion de deux fils métalliques d'un même thermocouple. Chacune des zones de connexion est entourée par un élément d'étanchéité distinct.

Selon un autre mode de réalisation possible, les supports sont clippés entre eux.

Selon un autre mode de réalisation possible, le connecteur comprend un élément d'étanchéité unique entourant de façon étanche chaque fil métallique de chaque thermocouple. L'élément d'étanchéité unique est logé dans un support unique. Le moyen de fermeture du support est formé par une partie d'extrémité de l'élément d'étanchéité unique débouchant de la première extrémité du support de façon à l'obturer.

L'invention concerne également un procédé de fabrication d'un capteur de température pour moteur de véhicule tel que défini précédemment. Le procédé comprend les étapes suivantes :
- fourniture d'un thermocouple comportant deux fils métalliques différents soudés entre eux à une première extrémité formant une jonction chaude pour mesurer une température T1 dans le moteur, les deux fils métalliques comportant chacun une deuxième extrémité, et
- connexion des deuxièmes extrémités des deux fils métalliques du thermocouple à deux premières extrémités de deux pattes métalliques par l'intermédiaire de deux zones de connexion.

Selon l'invention, le procédé comprend les étapes suivantes:
- entourage de chaque zone de connexion par un élément d'étanchéité,
- insertion des éléments d'étanchéité entourant les zones de connexion dans un support, le support comprenant une première extrémité traversée par les fils métalliques du thermocouple et une deuxième extrémité opposée traversée par les pattes métalliques,
- positionnement du support dans un moule,
- surmoulage d'un boitier de protection autour du support,
- insertion d'un circuit imprimé comprenant un circuit intégré dans le boitier de protection, et
- connexion électrique de deux deuxièmes extrémités des pattes métalliques au circuit imprimé.

Selon un mode de réalisation possible, le procédé comprend, après l'étape d'insertion des éléments d'étanchéité dans le support, une étape d'obturation de la première extrémité initialement ouverte du support par un élément de fermeture étanche, les fils métalliques du thermocouple traversant deux orifices prévus dans le moyen de fermeture.

Selon un mode de réalisation possible, le procédé comprend une étape de formation d'un évidemment au voisinage de la deuxième extrémité du support. L'évidemment est formé dans la partie supérieure du support de façon à faire communiquer une portion des pattes métalliques ressortant de l'élément d'étanchéité avec l'extérieur du support.

Selon un autre mode de réalisation possible, durant l'étape de surmoulage, une cavité est formée à l'intérieur du boitier de protection. La cavité est positionnée entre l'évidemment du support et le circuit intégré du circuit imprimé.

Selon un mode de réalisation possible, le procédé de fabrication comprend une étape de remplissage de la cavité et de l'évidemment par un matériau conducteur thermique reliant le circuit intégré à la portion des pattes métalliques ressortant de l'élément d'étanchéité.

L'invention fournit ainsi un capteur de température et son procédé de fabrication permettant d'obtenir une meilleure étanchéité entre les fils du thermocouple et le boitier de protection obtenu par surmoulage.

En effet, le boitier de protection n'est plus en contact direct avec la gaine de protection des fils du thermocouple. Il est possible d'utiliser des gaines classiques en résine fluorocarbonées sans entrainer de problèmes d'adhérence, ni d'étanchéité entre ces gaines et le boitier de protection.

Il est possible d'utiliser des gaines de protection et un boitier de protection constitués de matériaux incompatibles entre eux.

L'invention fournit aussi un capteur de température plus précis, dans lequel les sources d'erreur sont réduites car les distances entre le ou les points froids T0 et la mesure de température dans l'ASIC sont réduites.

En effet, cette invention permet de positionner le ou les points froids T0 à proximité de l'ASIC. De plus l'ajout d'une résine de conduction thermique favorise la conduction thermique ou autrement dit réduit la résistance thermique entre les pattes métalliques et le circuit intégré. Les pertes thermiques sont réduites.

L'écart entre la température de référence T0 lue à l'endroit du voltmètre dans le circuit intégré et la température réelle à l'endroit des deuxièmes extrémités des deux fils métalliques du thermocouple est réduit.

L'invention permet donc d'utiliser la sonde de température déjà intégrée dans le circuit intégré tout en fournissant une erreur sur la température de référence T0 minimale.

Les caractéristiques de l'invention seront décrites plus en détail en se référant aux dessins annexés dans lesquels :
- La figure 1 est une représentation en coupe d'un capteur de température de l'art antérieur ;
- La figure 2 est une représentation en coupe d'un capteur de température selon un mode de réalisation de l'invention ;
- La figure 3 représente schématiquement le détail de l'élément d'étanchéité entourant la zone de connexion ;
- La figure 4 représente schématiquement les éléments d'étanchéité montés dans un support ;
- La figure 5 représente schématiquement le boitier de protection surmoulé autour du support ;
- La figure 6 représente schématiquement ce boitier comprenant un circuit imprimé ;
- La figure 7 représente schématiquement une autre vue de ce boitier fermé par un couvercle ;
- La figure 8 représente schématiquement un capteur de température connecté à plusieurs fils de thermocouples ;
- La figure 9 représente schématiquement un capteur de température connecté à plusieurs fils de thermocouples, selon un autre mode de réalisation ;
- La figure 10 représente schématiquement un capteur de température connecté à plusieurs fils de thermocouples comprenant un élément d'étanchéité obturant la première extrémité du support.

La figure 1 représente l'intérieur d'un capteur de température 1 pour moteur de véhicule de l'art antérieur.

On entend par véhicule tout type de véhicule terrestre, et par exemple automobile et camion.

Ce capteur comprend un thermocouple 2 comportant deux fils métalliques 3 différents soudés entre eux à une première extrémité formant une jonction chaude (non représenté) pour mesurer une température T1 dans le moteur. Les deux fils métalliques 3 comportent chacun une deuxième extrémité 4 formant une jonction froide.

Le capteur comprend un boitier de protection 7 comprenant un connecteur 8 dans lequel les deuxièmes extrémités 4 des deux fils métalliques 3 du thermocouple 2 sont connectées à deux premières extrémités 9 de deux pattes métalliques 10 par l'intermédiaire de deux zones de connexion 11 respectives.

Les deux pattes métalliques 10 comprennent une deuxième extrémité 12 reliées électriquement à un circuit imprimé 5 comprenant un circuit intégré 6. Le circuit imprimé 5 est logé dans le boitier de protection 7.

Comme dit précédemment, chaque fils métalliques 3 est entouré d'une gaine de protection 18 constituée d'un matériau polymère résistant à des températures de l'ordre de 300°C, comme les résines fluorocarbonées, par exemple.

Cependant, le boitier de protection 7 est obtenu par surmoulage de ce dernier autour des deux zones de connexion 11 et des gaines de protection 18 qui présentent des propriétés anti-adhérentes. L'adhérence entre les gaines de protection 18 et le boitier de protection 7 n'est donc pas assurée, entrainant des problèmes d'étanchéité.

L'invention, telle que représentée sur la figure 2, propose un capteur de température 1 pour moteur de véhicule remédiant à cet inconvénient.

Le capteur de température 1 comprend un thermocouple 2 comportant deux fils métalliques 3 différents soudés entre eux à une première extrémité formant une jonction chaude (ou point chaud) pour mesurer une température T1 dans le moteur (non représenté). Les deux fils métalliques 3 comportent chacun une deuxième extrémité 4 formant une jonction froide.

La température T1 correspond à la température du milieu à mesurer. Les fils métalliques 3 sont constitués de deux métaux différents, comme par exemple un couple de métaux Nisil/Nicrosil pour un thermocouple de type N. Le thermocouple 2 est de type J, K, T, R, S, N, par exemple.

Les deuxièmes extrémités 4 des deux fils métalliques 3 du thermocouple 2 sont connectées à deux premières extrémités 9 de deux pattes métalliques 10 par l'intermédiaire de deux zones de connexion 11 respectives.

Les pattes métalliques sont constituées de matériau standard de connexion de type acier ou alliage de cuivre par exemple.

Les pattes métalliques sont constituées de deux métaux différents selon les matériaux utilisés pour les fils métalliques, comme par exemple un couple de métaux Nisil/Nicrosil pour un thermocouple de type N.

Le capteur de température 1 comprend un boitier de protection 7 comprenant un connecteur 8 dans lequel sont logées les deux zones de connexion 11. Le boitier de protection 7 est en polymère.

Les deux pattes métalliques 10 comprennent une deuxième extrémité 12 reliées électriquement à un circuit imprimé 5 comprenant un circuit intégré 6. Le circuit imprimé 5 est logé dans le boitier de protection 7.

Le circuit intégré 6 comprend le voltmètre et une sonde de température mesurant une température de référence T0.

Les deuxièmes extrémités 12 des pattes métalliques 10 sont connectées électriquement au voltmètre mesurant la tension entre les deux deuxièmes extrémités 4 des deux fils métalliques 3 du thermocouple 2.

Le circuit intégré 6 est un circuit intégré à application spécifique ASIC (Application Specific for Integrated Circuit) capable de traiter des signaux de tension pour les convertir en température. Il est capable de fournir un signal de sortie analogique ou numérique et d'utiliser un protocole spécifique tel que SENT.

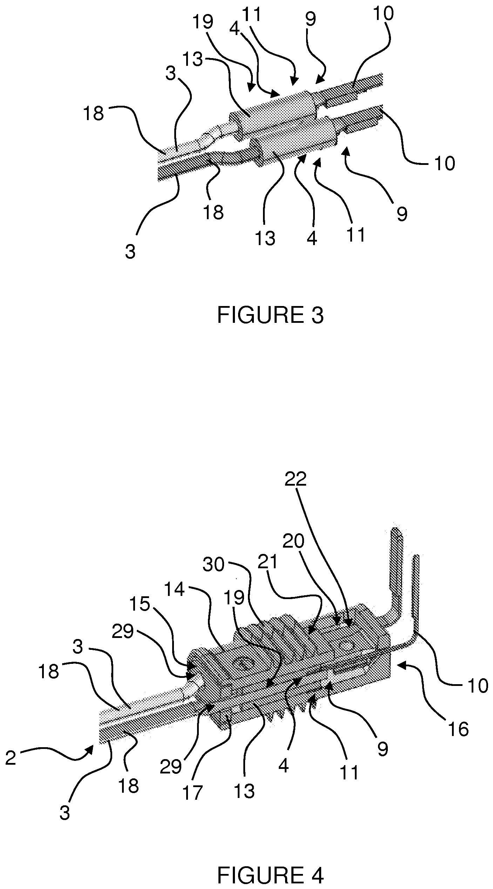

En connaissant la température de référence T0, qui est la plus proche possible de celle du point froid, et la tension aux deuxièmes extrémités 4 des fils métalliques 3 du thermocouple 2, on en déduit la température T1 de la jonction chaude (ou point chaud) qui correspond à la température du milieu à mesurer dans le moteur du véhicule. Les deuxièmes extrémités 4 des fils métalliques 3 du thermocouple 2 sont connectées électriquement aux pattes métalliques 10 par soudure ou sertissage, par exemple. Les deux pattes métalliques 10 sont connectées au circuit imprimé 5 par leur deuxièmes extrémités 12. Selon l'invention, telle qu'illustrée sur les figures 2 et 3, chaque zone de connexion 11 est entourée par un élément d'étanchéité 13. L'élément d'étanchéité 13 est constitué d'un matériau élastomère silicone. L'élément d'étanchéité 13 entoure complètement la zone de connexion 11 et présente une forme cylindrique, par exemple.

De préférence, l'élément d'étanchéité 13 s'étend de la zone de connexion 11 jusqu'à une portion de fil métallique entourée par la gaine de protection 19. L'élément d'étanchéité 13 recouvre donc une partie de la gaine de protection 18 pour améliorer l'étanchéité.

Comme représenté sur les figures 2 et 4, le connecteur 8 comprend un support 14, constitué d'un matériau polymère par exemple, dans lequel sont logées les zones de connexion 11 entourées des éléments d'étanchéité 13.

Le support 14 comprend une première extrémité 15 traversée par les fils métalliques 3 du thermocouple 2 et une deuxième extrémité 16 opposée traversée par les pattes métalliques 10.

L'élément d'étanchéité 13 assure l'étanchéité entre la zone de connexion 11 et la portion de fil métallique entourée par la gaine de protection 19 et le support 14.

La première extrémité 15 du support 14 est une extrémité initialement ouverte. Selon un mode de réalisation de l'invention, la première extrémité 15 est obturée par un moyen de fermeture 17 traversé par les fils métalliques 3 du thermocouple 2.

Dans un autre mode de réalisation différent, la zone d'extrémité 15 peut être conservée fermée sur la pièce finie. Dans cette configuration les joints en élastomère silicone (13) sont dit « apparents ». Dans ce cas, le couvercle 17 n'est pas nécessaire.

Selon un mode de réalisation, le moyen de fermeture 17 est un couvercle fixé à la première extrémité 15 du support 14.

Le couvercle comprend deux orifices 29 traversés par les fils métalliques 3 respectifs du thermocouple 2.

La première extrémité 15 du support 14 est ouverte pour permettre l'introduction des pattes métalliques 10 et l'élément d'étanchéité 13 dans le support 14.

L'élément d'étanchéité 13 fait l'étanchéité entre les fils 3 et le support 14. Les 5 nervures (30) du support 14 font elles l'étanchéité entre le support 14 et le boitier 7. Ces nervures sont fondues et mélangées à la matière du boitier 7 lors de l'injection de la matière du boitier 7. Le moyen de fermeture 17 permet de protéger l'intérieur du support 14 et donc les éléments d'étanchéité 13 du matériau constituant le boitier de protection 7 lors de l'opération de l'injection plastique

Le support 14 comprend des nervures 30 à sa périphérie pour assurer une bonne adhésion au boitier de protection 7 et empêcher tout mouvement du support 14 après moulage.

Le support 14 entoure complètement les éléments d'étanchéité 13. Le support 14 peut être formé de deux parties emboitables, par exemple. Il est constitué d'un matériau polymère compatible avec le matériau du boitier de protection 7, assurant une bonne adhérence entre les deux. Le matériau du boitier de protection 7 et celui du support 14 peuvent être identiques. Ils peuvent être constitués de PBT (polytéréphtalate de butylène) ou de PA (polyamide).

Selon un autre mode de réalisation et comme représenté sur la figure 4, le support 14 du connecteur comprend un évidemment 20 au voisinage de sa deuxième extrémité 16. L'évidemment 20 est formé dans la partie supérieure 21 du support 14 de façon à faire communiquer une portion 22 des pattes métalliques 10 ressortant de l'élément d'étanchéité 13 avec l'extérieur du support 14.

L'évidemment 20 peut avoir une largeur de 3 à 4 mm et une longueur de 4 mm par exemple.

Comme représenté sur la figure 2, le circuit intégré 6 est positionné sur le circuit imprimé 5 face à l'évidemment 20 pour favoriser la mesure de la température froide T0.

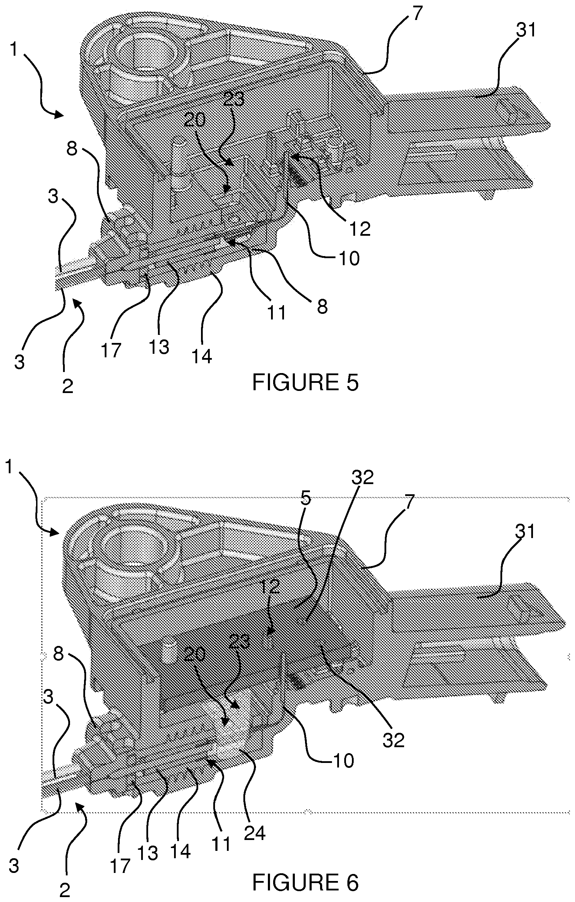

Une cavité 23 est prévue à l'intérieur du boitier de protection 7 entre l'évidemment 20 du support 14 et le circuit intégré 6, comme représentée sur les figures 2 et 5.

La cavité 23 peut avoir une longueur de 10 mm et une largeur de 6 mm, par exemple ou une taille plus importante lorsqu'il y a plus d'une mesure de température.

La portion 22 des pattes métalliques 10 ressortant de l'élément d'étanchéité 13 est alors positionnée face au circuit intégré 6.

Selon un autre mode de réalisation et comme représenté sur la figure 6, la cavité 23 du boitier de protection 7 et l'évidemment 20 du support 14 sont remplis par un matériau conducteur thermique 24 reliant le circuit intégré 6 à la portion 22 des pattes métalliques 10 ressortant de l'élément d'étanchéité 13.

Ce matériau conducteur thermique 24 permet d'éviter les pertes thermiques entre le point froid du thermocouple 2 (deuxième extrémité 4 des fils métalliques 3) et le circuit intégré 6 comprenant la sonde de température mesurant la température T0 du point froid. Les pertes thermiques sont réduites. L'écart de température entre les deuxièmes extrémités 4 des deux fils métalliques 3 du thermocouple 2 et la sonde de température mesurant une température de référence T0 intégrée dans le circuit intégré 6 est réduit, passant de 4-5 °C à moins de 1 °C dans des conditions thermiques stabilisées.

Le matériau conducteur thermique 24 permet d'obtenir un contact thermique entre la portion 22 des pattes métalliques 10 ressortant de l'élément d'étanchéité 13 et le circuit intégré 6.

Le matériau conducteur thermique présente une conductivité thermique d'au moins 1 Watt/K/m². Le matériau conducteur thermique peut être une patte thermique ou une résine thermo conductrice comme par exemple une résine époxy. Le matériau conducteur thermique peut être un silicone comprenant des charges céramiques ou métallique, une colle ou un produit hyperthixotrope.

Le matériau conducteur thermique 24 remplit idéalement complètement la cavité 23 du boitier de protection 7 et l'évidemment 20 du support 14 jusqu'au contact avec l'ASIC 6.

Le matériau conducteur thermique 24 améliore la conduction thermique entre les deuxièmes extrémités 4 des deux fils métalliques 3 du thermocouple 2 et le circuit intégré 6.

Le capteur de température 1 comprend également un deuxième connecteur 31 pour le relier électriquement à un dispositif électronique (non représenté), tel que l'électronique de contrôle du moteur. Des bornes de connexions 32 sont prévues pour relier le circuit imprimé 5 au deuxième connecteur 31.

Selon une variante possible (non représentée), le circuit imprimé 5 comprend un orifice de remplissage le traversant, permettant le passage du matériau conducteur thermique vers la cavité 23 du boitier de protection 7 et l'évidemment 20 du support 14.

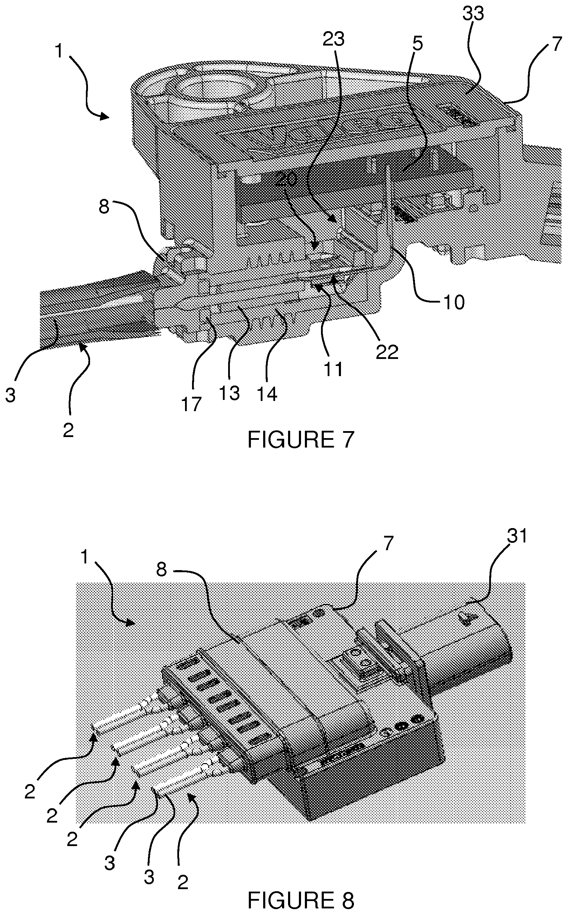

Selon un autre mode de réalisation et comme représenté sur la figure 8, le capteur de température 1 comprend plusieurs thermocouples 2 comportant chacun deux fils métalliques 3 connectées à deux pattes métalliques 10 respectives par l'intermédiaire de deux zones de connexion 11 respectives.

Le connecteur 8 comprend plusieurs supports 14. Chacun des supports 14 reçoit deux zones de connexion 11 de deux fils métalliques 3 d'un même thermocouple 2. Chacune des zones de connexion 11 est entourée par un élément d'étanchéité 13 distinct.

Un connecteur 8 multi-supports permet de réduire l'encombrement et le nombre de composants, réduisant les coûts. C'est-à-dire une seule pièce qui reçoit tous les fils (3), joints silicone (19) et connexions (10)

Sur la figure 8, les supports (non représentés) sont alignés.

Selon une variante possible, les supports 14 sont clippés entre eux, permettant de faciliter leur assemblage ensemble.

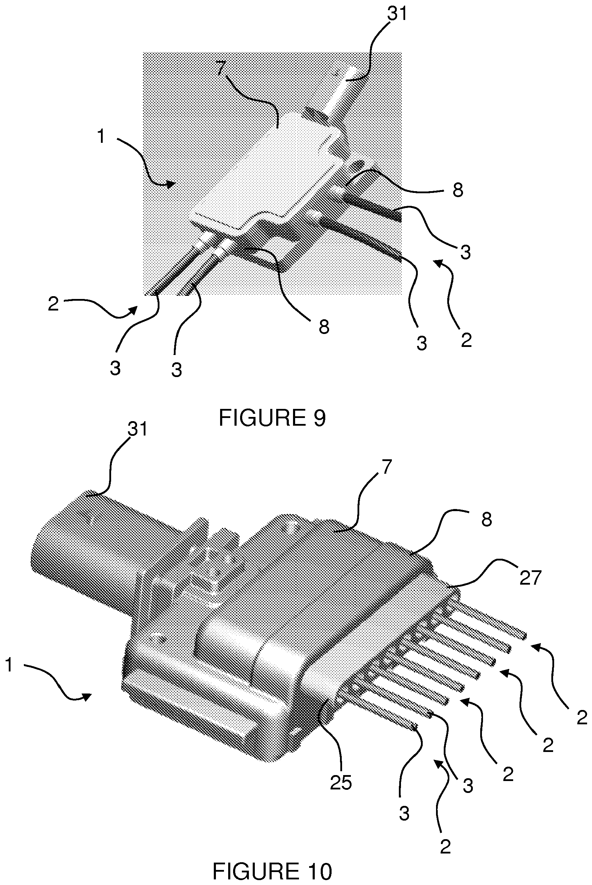

Selon une autre variante possible représentée sur la figure 10, le connecteur 8 comprend un élément d'étanchéité unique 25 entourant de façon étanche chaque fil métallique 3 de chaque thermocouple 2.

L'élément d'étanchéité unique 25 est logé dans un support unique (non représenté).

Le moyen de fermeture du support 14 est formé par une partie d'extrémité 27 de l'élément d'étanchéité unique 25 débouchant de la première extrémité 15 du support 14 de façon à l'obturer.

L'élément d'étanchéité unique 25 comprend une pluralité d'orifices 26 pour le passage des fils métalliques 3 des thermocouples 2. Et par exemple, jusqu'à 4 paires de fils maximum pour 4 mesures de température.

L'avantage de ce mode de réalisation est de pouvoir détecter facilement l'absence d'un fil ou d'un joint d'étanchéité, de simplifier la fixation du support dans le moule durant l'étape de surmoulage et d'éviter la présence d'un couvercle destiné à protéger les éléments d'étanchéité du matériau injecté durant l'étape de surmoulage.

Selon une autre variante possible représentée sur la figure 9, le capteur de température 1 comprend deux connecteurs 8 orientés selon des directions différentes. Dans l'exemple de la figure 9, ces directions sont orthogonales.

Selon une autre variante possible (non représentée), le connecteur 8 comprend une zone de découpe entre chaque support 14 permettant de faciliter la séparation entre deux supports 14.

L'invention concerne également un procédé de fabrication d'un capteur de température 1 pour moteur de véhicule tel que défini précédemment.

Ce procédé comprend une étape de fourniture d'un thermocouple 2 comportant deux fils métalliques 3 différents soudés entre eux à une première extrémité formant une jonction chaude pour mesurer une température T1 dans le moteur.

Le procédé comprend également une étape de connexion des deuxièmes extrémités 4 des deux fils métalliques 3 du thermocouple 2 à deux premières extrémités 9 de deux pattes métalliques 10 par l'intermédiaire de deux zones de connexion 11.

Selon l'invention, le procédé comprend une étape d'entourage de chaque zone de connexion 11 par un élément d'étanchéité 13, telle que représentée sur la figure 3.

Le procédé comprend ensuite une étape d'insertion des éléments d'étanchéité 13 entourant les zones de connexion 11 dans un support 14, puis une étape d'obturation de la première extrémité 15 du support 14 par un élément de fermeture étanche 17, telles que représentées sur la figure 4. Les fils métalliques 3 du thermocouple 2 traversent le moyen de fermeture 17 qui est de préférence étanche.

Le support 14 est ensuite placé dans un moule. Le procédé comprend une étape de surmoulage d'un boitier de protection 7 autour du support 14 permettant d'obtenir un boitier de protection 7 moulé autour du support 14, tel que représenté sur la figure 5.

Le support 14 permet de maintenir correctement les pattes métalliques 10 durant l'étape de moulage.

Si le surmoulage s'est bien déroulé et que l'étanchéité est assurée entre l'élément d'étanchéité 13 et le boitier de protection 7, il est possible de retirer le moyen de fermeture 17.

Les éléments d'étanchéité 13 ne sont pas accessibles, ni visibles de l'extérieur, permettant d'éviter leur contorsion lors du mouvement des fils métalliques 3 et de donner une impression de solidité.

En variante, le procédé comprend une étape de formation d'un évidemment 20 au voisinage de la deuxième extrémité 16 du support 14. L'évidemment 20 est formé dans la partie supérieure 21 du support 14 de façon à faire communiquer une portion 22 des pattes métalliques 10 ressortant de l'élément d'étanchéité 13 avec l'extérieur du support 14.

Un circuit imprimé 5 comprenant un circuit intégré 6 est ensuite inséré dans le boitier de protection 7 et les deux deuxièmes extrémités 12 des pattes métalliques 10 sont connectées électriquement au circuit imprimé 5, comme représenté sur la figure 6.

En variante, durant l'étape de surmoulage du boitier de protection 7, une cavité 23 est formée à l'intérieur du boitier de protection 7. La cavité 23 est positionnée entre l'évidemment 20 du support 14 et le circuit intégré 6 du circuit imprimé 5.

Le procédé peut également comprendre une étape de remplissage de la cavité 23 et de l'évidemment 20 par un matériau conducteur thermique 24 reliant le circuit intégré 6 à la portion 22 des pattes métalliques 10 ressortant de l'élément d'étanchéité 13.

Un couvercle 33 est ensuite emboité sur la partie supérieure du boitier de protection 7 pour refermer l'intérieur de ce dernier.

Selon une autre variante possible (non représentée), le moyen de fermeture 17 est formé d'une multitude de parois cassables disposées préalablement dans le support 14. Les parois cassables se brisent et se désolidarisent du support 14 lors de la fermeture du moule, juste avant l'injection de matériau formant le boitier de protection 7.

L'intérêt de cette solution est qu'il n'y a pas de pièce rapportée (17) : la protection de l'intérieur du support (14) est réalisée par des cloisons sécables déjà présentes dans le support (14) mais qui sont simplement déplacée lors de l'injection : juste avant l'injection du plastique qui forme la pièce (7), des parties mobiles du moule se referment sur le support et ces cloisons pour les désolidariser du support (14) et refermer la cavité contenant les joints silicone.

## Revendications

1. Capteur de température (1) pour moteur de véhicule, comprenant :
- au moins un thermocouple (2) comportant deux fils métalliques (3) différents reliés entre eux à une première extrémité formant une jonction chaude pour mesurer une température T1 dans le moteur, lesdits deux fils métalliques (3) comportant chacun une deuxième extrémité (4) formant une jonction froide,
- un boitier de protection (7) comprenant un connecteur (8) dans lequel les deuxièmes extrémités (4) des deux fils métalliques (3) du thermocouple (2) sont connectées à deux premières extrémités (9) de deux pattes métalliques (10) par l'intermédiaire de deux zones de connexion (11), les deux pattes métalliques (10) comprenant une deuxième extrémité (12) reliées électriquement à un circuit imprimé (5) comprenant un circuit intégré (6), ledit circuit imprimé (5) étant logé dans le boitier de protection (7),
**caractérisé en ce que** :
- chaque zone de connexion (11) est entourée par un élément d'étanchéité (13),
- le connecteur (8) comprend un support (14) dans lequel sont logées les zones de connexion (11) entourées des éléments d'étanchéité (13), ledit support (14) comprenant une première extrémité (15) traversée par les fils métalliques (3) du thermocouple (2) et une deuxième extrémité (16) opposée traversée par les pattes métalliques (10),
- ledit boitier de protection (7) étant surmoulé autour du support (14).

2. Capteur de température (1) selon la revendication 1, **caractérisé en ce que** la première extrémité (15) du support (14) est une extrémité ouverte obturée par un moyen de fermeture (17) comprenant deux orifices (29) traversés par les fils métalliques (3) du thermocouple (2).

3. Capteur de température (1) selon la revendication 1, **caractérisé en ce que** la première extrémité (15) du support (14) est une extrémité ouverte non obturée.

4. Capteur de température (1) selon l'une quelconque des revendications 1 à 3, **caractérisé en ce que**, chacun des fils métalliques (3) étant entouré d'une gaine de protection (18), l'élément d'étanchéité (13) s'étend de la zone de connexion (11) jusqu'à une portion (19) de fil métallique (3) entourée par la gaine de protection (18).

5. Capteur de température (1) selon l'une quelconque des revendications 1 à 4, **caractérisé en ce que** le support (14) du connecteur (8) comprend un évidemment (20) au voisinage de sa deuxième extrémité (16), l'évidemment (20) étant formé dans la partie supérieure (21) du support (14) de façon à faire communiquer une portion (22) des pattes métalliques (10) ressortant de l'élément d'étanchéité (13) avec l'extérieur du support (14).

6. Capteur de température (1) selon la revendication 5, **caractérisé en ce que** le circuit intégré (6) est positionné sur le circuit imprimé (5) face à l'évidemment (20), une cavité (23) étant prévue à l'intérieur du boitier de protection (7) entre l'évidemment (20) du support (14) et le circuit intégré (6).

7. Capteur de température (1) selon la revendication 6, **caractérisé en ce que** la cavité (23) du boitier de protection (7) et l'évidemment (20) du support (14) sont remplis par un matériau conducteur thermique (24) reliant le circuit intégré (6) à la portion (22) des pattes métalliques (10) ressortant de l'élément d'étanchéité (13).

8. Capteur de température (1) selon l'une quelconque des revendications 1 à 7, **caractérisé en ce qu'**il comprend plusieurs thermocouples (2) comportant chacun deux fils métalliques (3) connectés à deux pattes métalliques (10) respectives par l'intermédiaire de deux zones de connexion (11) respectives.

9. Capteur de température (1) selon la revendication 8, **caractérisé en ce que** le connecteur (8) comprend plusieurs supports (14), chacun des supports (14) recevant deux zones de connexion (11) de deux fils métalliques (3) d'un même thermocouple (2), chacune des zones de connexion (11) étant entourée par un élément d'étanchéité (13) distinct.

10. Capteur de température (1) selon la revendication 9, **caractérisé en ce que** les supports (14) sont clippés entre eux.

11. Capteur de température (1) selon la revendication 8, **caractérisé en ce que** le connecteur (8) comprend un élément d'étanchéité unique (25) entourant de façon étanche chaque fil métallique (3) de chaque thermocouple (2), ledit élément d'étanchéité unique (25) étant logé dans un support unique, le moyen de fermeture du support (14) étant formé par une partie d'extrémité (27) de l'élément d'étanchéité unique (25) débouchant de la première extrémité (15) du support (14) de façon à l'obturer.

12. Procédé de fabrication d'un capteur de température (1) pour moteur de véhicule tel que défini par l'une quelconque des revendications 1 à 11, ledit procédé comprenant les étapes suivantes :
- fourniture d'un thermocouple (2) comportant deux fils métalliques (3) différents soudés entre eux à une première extrémité formant une jonction chaude pour mesurer une température T1 dans le moteur, lesdits deux fils métalliques (3) comportant chacun une deuxième extrémité (4),
- connexion des deuxièmes extrémités (4) des deux fils métalliques (3) du thermocouple (2) à deux premières extrémités (9) de deux pattes métalliques (10) par l'intermédiaire de deux zones de connexion (11),
**caractérisé en ce qu'**il comprend les étapes suivantes:
- entourage de chaque zone de connexion (11) par un élément d'étanchéité (13),
- insertion des éléments d'étanchéité (13) entourant les zones de connexion (11) dans un support (14), ledit support (14) comprenant une première extrémité (15) traversée par les fils métalliques (3) du thermocouple (2) et une deuxième extrémité (16) opposée traversée par les pattes métalliques (10),
- positionnement du support (14) dans un moule,
- surmoulage d'un boitier de protection (7) autour du support (14),
- insertion d'un circuit imprimé (5) comprenant un circuit intégré (6) dans le boitier de protection (7),
- connexion électrique de deux deuxièmes extrémités (12) des pattes métalliques (10) au circuit imprimé (5).

13. Procédé de fabrication selon la revendication 12, **caractérisé en ce qu'**il comprend, après l'étape d'insertion des éléments d'étanchéité (13) dans le support (14), une étape d'obturation de la première extrémité (15) initialement ouverte du support (14) par un élément de fermeture étanche (17), les fils métalliques (3) du thermocouple (2) traversant deux orifices (29) prévus dans le moyen de fermeture (17).

14. Procédé de fabrication selon l'une quelconque des revendications 12 à 13, **caractérisé en ce qu'**il comprend une étape de formation d'un évidemment (20) au voisinage de la deuxième extrémité (16) du support (14), l'évidemment (20) étant formé dans la partie supérieure (21) du support (14) de façon à faire communiquer une portion (22) des pattes métalliques (10) ressortant de l'élément d'étanchéité (13) avec l'extérieur du support (14).

15. Procédé de fabrication selon la revendication 14, **caractérisé en ce que**, durant l'étape de surmoulage, une cavité (23) est formée à l'intérieur du boitier de protection (7), ladite cavité (23) étant positionnée entre l'évidemment (20) du support (14) et le circuit intégré (6) du circuit imprimé (5).

16. Procédé de fabrication selon la revendication 15, **caractérisé en ce qu'**il comprend une étape de remplissage de la cavité (23) et de l'évidemment (20) par un matériau conducteur thermique (24) reliant le circuit intégré (6) à la portion (22) des pattes métalliques (10) ressortant de l'élément d'étanchéité (13).

## Patentansprüche

1. Temperatursensor (1) für einen Fahrzeugmotor, umfassend:
- wenigstens ein Thermoelement (2), das zwei verschiedene Metalldrähte (3) aufweist, die an einem ersten Ende, das eine heiße Verbindungsstelle bildet, miteinander verbunden sind, um eine Temperatur T1 im Motor zu messen, wobei die zwei Metalldrähte (3) jeweils ein zweites Ende (4) aufweisen, das eine kalte Verbindungsstelle bildet,
- ein Schutzgehäuse (7), das einen Verbinder (8) umfasst, in welchem die zweiten Enden (4) der beiden Metalldrähte (3) des Thermoelements (2) über zwei Verbindungsbereiche (11) mit zwei ersten Enden (9) von zwei Metalllaschen (10) verbunden sind, wobei die zwei Metalllaschen (10) jeweils ein zweites Ende (12) umfassen, das mit einer Leiterplatte (5), die einen integrierten Schaltkreis (6) umfasst, elektrisch verbunden ist, wobei Leiterplatte (5) in dem Schutzgehäuse (7) untergebracht ist,
**dadurch gekennzeichnet, dass**:
- jeder Verbindungsbereich (11) von einem Dichtelement (13) umgeben ist,
- der Verbinder (8) einen Halter (14) umfasst, in welchem die von den Dichtelementen (13) umgebenen Verbindungsbereiche (11) aufgenommen sind, wobei der Halter (14) ein erstes Ende (15), das von den Metalldrähten (3) des Thermoelements (2) durchquert wird, und ein entgegengesetztes zweites Ende (16), das von den Metalllaschen (10) durchquert wird, umfasst,
- wobei das Schutzgehäuse (7) um den Halter (14) herum aufgeformt ist.

2. Temperatursensor (1) nach Anspruch 1, **dadurch gekennzeichnet, dass** das erste Ende (15) des Halters (14) ein offenes Ende ist, das durch ein Verschlussmittel (17) verschlossen ist, das zwei Öffnungen (29) umfasst, die von den Metalldrähten (3) des Thermoelements (2) durchquert werden.

3. Temperatursensor (1) nach Anspruch 1, **dadurch gekennzeichnet, dass** das erste Ende (15) des Halters (14) ein nicht verschlossenes offenes Ende ist.

4. Temperatursensor (1) nach einem der Ansprüche 1 bis 3, **dadurch gekennzeichnet, dass**, wenn jeder der Metalldrähte (3) von einem Schutzmantel (18) umgeben ist, das Dichtelement (13) sich vom Verbindungsbereich (11) bis zu einem von dem Schutzmantel (18) umgebenen Abschnitt (19) des Metalldrahtes (3) erstreckt.

5. Temperatursensor (1) nach einem der Ansprüche 1 bis 4, **dadurch gekennzeichnet, dass** der Halter (14) des Verbinders (8) eine Aussparung (20) in der Nähe seines zweiten Endes (16) umfasst, wobei die Aussparung (20) im oberen Teil (21) des Halters (14) so ausgebildet ist, dass sie einen Abschnitt (22) der Metalllaschen (10), der aus dem Dichtelement (13) herausragt, mit der Außenseite des Halters (14) in Verbindung bringt.

6. Temperatursensor (1) nach Anspruch 5, **dadurch gekennzeichnet, dass** der integrierte Schaltkreis (6) auf der Leiterplatte (5) gegenüber der Aussparung (20) positioniert ist, wobei ein Hohlraum (23) im Inneren des Schutzgehäuses (7) zwischen der Aussparung (20) des Halters (14) und dem integrierten Schaltkreis (6) vorgesehen ist.

7. Temperatursensor (1) nach Anspruch 6, **dadurch gekennzeichnet, dass** der Hohlraum (23) des Schutzgehäuses (7) und die Aussparung (20) des Halters (14) mit einem wärmeleitenden Material (24) gefüllt sind, das den integrierten Schaltkreis (6) mit dem Abschnitt (22) der Metalllaschen (10), der aus dem Dichtelement (13) herausragt, verbindet.

8. Temperatursensor (1) nach einem der Ansprüche 1 bis 7, **dadurch gekennzeichnet, dass** er mehrere Thermoelemente (2) umfasst, die jeweils zwei Metalldrähte (3) aufweisen, die über zwei jeweilige Verbindungsbereiche (11) mit zwei jeweiligen Metalllaschen (10) verbunden sind.

9. Temperatursensor (1) nach Anspruch 8, **dadurch gekennzeichnet, dass** der Verbinder (8) mehrere Halter (14) umfasst, wobei jeder der Halter (14) zwei Verbindungsbereiche (11) von zwei Metalldrähten (3) ein und desselben Thermoelements (2) aufnimmt, wobei jeder der Verbindungsbereiche (11) von einem gesonderten Dichtelement (13) umgeben ist.

10. Temperatursensor (1) nach Anspruch 9, **dadurch gekennzeichnet, dass** die Halter (14) zusammengeclipst sind.

11. Temperatursensor (1) nach Anspruch 8, **dadurch gekennzeichnet, dass** der Verbinder (8) ein einziges Dichtelement (25) umfasst, das jeden Metalldraht (3) jedes Thermoelements (2) dicht umgibt, wobei das einzige Dichtelement (25) in einem einzigen Halter untergebracht ist, wobei das Verschlussmittel des Halters (14) von einem Endteil (27) des einzigen Dichtelements (25) gebildet wird, der aus dem ersten Ende (15) des Halters (14) herausragt, so dass er dieses verschließt.

12. Verfahren zur Herstellung eines Temperatursensors (1) für einen Fahrzeugmotor, wie durch einen der Ansprüche 1 bis 11 definiert, wobei das Verfahren die folgenden Schritte umfasst:
- Bereitstellen eines Thermoelements (2), das zwei verschiedene Metalldrähte (3) aufweist, die an einem ersten Ende, das eine heiße Verbindungsstelle bildet, miteinander verschweißt sind, um eine Temperatur T1 im Motor zu messen, wobei die zwei Metalldrähte (3) jeweils ein zweites Ende (4) aufweisen,
- Verbinden der zwei Enden (4) der zwei Metalldrähte (3) des Thermoelements (2) über zwei Verbindungsbereiche (11) mit zwei ersten Enden (9) von zwei Metalllaschen (10),
**dadurch gekennzeichnet, dass** es die folgenden Schritte umfasst:
- Umgeben jedes Verbindungsbereichs (11) mit einem Dichtelement (13),
- Einsetzen der die Verbindungsbereiche (11) umgebenden Dichtelemente (13) in einen Halter (14), wobei der Halter (14) ein erstes Ende (15), das von den Metalldrähten (3) des Thermoelements (2) durchquert wird, und ein entgegengesetztes zweites Ende (16), das von den Metalllaschen (10) durchquert wird, umfasst,
- Positionieren des Halters (14) in einer Form,
- Aufformen eines Schutzgehäuses (7) um den Halter (14) herum,
- Einsetzen einer Leiterplatte (5), die einen integrierten Schaltkreis (6) umfasst, in das Schutzgehäuse (7),
- elektrisches Verbinden von zwei zweiten Enden (12) der Metalllaschen (10) mit der Leiterplatte (5).

13. Herstellungsverfahren nach Anspruch 12, **dadurch gekennzeichnet, dass** es, nach dem Schritt des Einsetzens der Dichtelemente (13) in den Halter (14), einen Schritt des Verschließens des ursprünglich offenen ersten Endes (15) des Halters (14) durch ein Element zum dichten Verschließen (17) umfasst, wobei die Metalldrähte (3) des Thermoelements (2) zwei Öffnungen (29) durchqueren, die in dem Verschlussmittel (17) vorgesehen sind.

14. Herstellungsverfahren nach einem der Ansprüche 12 bis 13, **dadurch gekennzeichnet, dass** es einen Schritt des Ausbildens einer Aussparung (20) in der Nähe des zweiten Endes (16) des Halters (14) umfasst, wobei die Aussparung (20) im oberen Teil (21) des Halters (14) so ausgebildet wird, dass sie einen Abschnitt (22) der Metalllaschen (10), der aus dem Dichtelement (13) herausragt, mit der Außenseite des Halters (14) in Verbindung bringt.

15. Herstellungsverfahren nach Anspruch 14, **dadurch gekennzeichnet, dass** während des Schrittes des Aufformens ein Hohlraum (23) im Inneren des Schutzgehäuses (7) ausgebildet wird, wobei der Hohlraum (23) zwischen der Aussparung (20) des Halters (14) und dem integrierten Schaltkreis (6) der Leiterplatte (5) positioniert ist.

16. Herstellungsverfahren nach Anspruch 15, **dadurch gekennzeichnet, dass** es einen Schritt des Füllens des Hohlraums (23) und der Aussparung (20) mit einem wärmeleitenden Material (24) umfasst, das den integrierten Schaltkreis (6) mit dem Abschnitt (22) der Metalllaschen (10), der aus dem Dichtelement (13) herausragt, verbindet.

## Claims

1. Temperature sensor (1) for a vehicle engine, comprising:
- at least one thermocouple (2) comprising two different metal wires (3) linked together at a first end forming a hot junction for measuring a temperature T1 in the engine, said two metal wires (3) each comprising a second end (4) forming a cold junction,
- a protective casing (7) comprising a connector (8) in which the second ends (4) of the two metal wires (3) of the thermocouple (2) are connected to two first ends (9) of two metal lugs (10) via two connection zones (11), the two metal lugs (10) comprising a second end (12) linked electrically to a printed circuit (5) comprising an integrated circuit (6), said printed circuit (5) being housed in the protective casing (7),
**characterized in that**:
- each connection zone (11) is surrounded by a sealing element (13),
- the connector (8) comprises a support (14) in which are housed the connection zones (11) surrounded by the sealing elements (13), said support (14) comprising a first end (15) that is passed through by the metal wires (3) of the thermocouple (2) and an opposite second end (16) that is passed through by the metal lugs (10),
- said protective casing (7) being overmoulded around the support (14).

2. Temperature sensor (1) according to Claim 1, **characterized in that** the first end (15) of the support (14) is an open end closed off by a closure means (17) comprising two orifices (29) that are passed through by the metal wires (3) of the thermocouple (2).

3. Temperature sensor (1) according to Claim 1, **characterized in that** the first end (15) of the support (14) is an open end that is not closed off.

4. Temperature sensor (1) according to any one of Claims 1 to 3, **characterized in that**, each of the metal wires (3) being surrounded by a protective sheath (18), the sealing element (13) extends from the connection zone (11) to a portion (19) of metal wire (3) surrounded by the protective sheath (18).

5. Temperature sensor (1) according to any one of Claims 1 to 4, **characterized in that** the support (14) of the connector (8) comprises a recess (20) in the vicinity of its second end (16), the recess (20) being formed in the upper part (21) of the support (14) so as to connect a portion (22) of the metal lugs (10) emerging from the sealing element (13) with the outside of the support (14) .

6. Temperature sensor (1) according to Claim 5, **characterized in that** the integrated circuit (6) is positioned on the printed circuit (5) facing the recess (20), a cavity (23) being provided inside the protective casing (7) between the recess (20) of the support (14) and the integrated circuit (6).

7. Temperature sensor (1) according to Claim 6, **characterized in that** the cavity (23) of the protective casing (7) and the recess (20) of the support (14) are filled with a thermally conductive material (24) linking the integrated circuit (6) to the portion (22) of the metal lugs (10) emerging from the sealing element (13).

8. Temperature sensor (1) according to any one of Claims 1 to 7, **characterized in that** it comprises several thermocouples (2) each comprising two metal wires (3) connected to two respective metal lugs (10) via two respective connection zones (11).

9. Temperature sensor (1) according to Claim 8, **characterized in that** the connector (8) comprises several supports (14), each of the supports (14) receiving two connection zones (11) of two metal wires (3) of the same thermocouple (2), each of the connection zones (11) being surrounded by a distinct sealing element (13).

10. Temperature sensor (1) according to Claim 9, **characterized in that** the supports (14) are clipped together.

11. Temperature sensor (1) according to Claim 8, **characterized in that** the connector (8) comprises a single sealing element (25) tightly surrounding each metal wire (3) of each thermocouple (2), said single sealing element (25) being housed in a single support, the closure means of the support (14) being formed by an end part (27) of the single sealing element (25) emerging from the first end (15) of the support (14) so as to close it off.

12. Method for manufacturing a temperature sensor (1) for a vehicle engine as defined by any one of Claims 1 to 11, said method comprising the following steps:
- supplying a thermocouple (2) comprising two different metal wires (3) soldered together at a first end forming a hot junction for measuring a temperature T1 in the engine, said two metal wires (3) each comprising a second end (4),
- connecting the second ends (4) of the two metal wires (3) of the thermocouple (2) to two first ends (9) of two metal lugs (10) via two connection zones (11), **characterized in that** it comprises the following steps:
- surrounding each connection zone (11) with a sealing element (13),
- inserting the sealing elements (13) surrounding the connection zones (11) into a support (14), said support (14) comprising a first end (15) that is passed through by the metal wires (3) of the thermocouple (2) and an opposite second end (16) that is passed through by the metal lugs (10),
- positioning the support (14) in a mould,
- overmoulding a protective casing (7) around the support (14),
- inserting a printed circuit (5) comprising an integrated circuit (6) into the protective casing (7),
- electrically connecting two second ends (12) of the metal lugs (10) to the printed circuit (5).

13. Manufacturing method according to Claim 12, **characterized in that** it comprises, after the step of inserting the sealing elements (13) into the support (14), a step of closing off the initially open first end (15) of the support (14) with a tight closure element (17), the metal wires (3) of the thermocouple (2) passing through two orifices (29) provided in the closure means (17) .

14. Manufacturing method according to either one of Claims 12 and 13, **characterized in that** it comprises a step of forming a recess (20) in the vicinity of the second end (16) of the support (14), the recess (20) being formed in the upper part (21) of the support (14) so as to connect a portion (22) of the metal lugs (10) emerging from the sealing element (13) with the outside of the support (14).

15. Manufacturing method according to Claim 14, **characterized in that**, during the overmoulding step, a cavity (23) is formed inside the protective casing (7), said cavity (23) being positioned between the recess (20) of the support (14) and the integrated circuit (6) of the printed circuit (5).

16. Manufacturing method according to Claim 15, **characterized in that** it comprises a step of filling the cavity (23) and the recess (20) with a thermally conductive material (24) linking the integrated circuit (6) to the portion (22) of the metal lugs (10) emerging from the sealing element (13).
